# EUROPÄISCHE PATENTSCHRIFT

(11) **EP 3 732 225 B1**
(45) Veröffentlichungstag und Bekanntmachung des Hinweises auf die Patenterteilung: **17.11.2021**
(21) Anmeldenummer: 18814933.0
(22) Anmeldetag: 12.12.2018
(51) Int. Cl.: C08G 18/75, C08G 18/80, C08G 18/28

(54) **SILANMODIFIZIERTE POLYHARNSTOFFVERBINDUNGEN AUF BASIS ISOCYANURAT- UND ALLOPHANATGRUPPEN AUFWEISENDER POLYISOCYANATE**
SILANE-MODIFIED POLYUREA COMPOUNDS BASED ON POLYISOCYANATES WITH ISOCYANURATE AND ALLOPHANATE GROUPS
COMPOSÉS POLYURÉES MODIFIÉS PAR UN SILANE À BASE DES POLYISOCYANATES COMPORTANT DES GROUPES ISOCYANURATE ET DES GROUPES ALLOPHANATE

(30) Priorität: 28.12.2017 EP 17210829
(43) Veröffentlichungstag der Anmeldung: 04.11.2020
(73) Patentinhaber: Covestro Intellectual Property GmbH & Co. KG, 51373 Leverkusen (DE)
(72) Erfinder: FULSCHE, Thomas, 40764 Langenfeld (DE); KÖCHER, Jürgen, 40764 Langenfeld (DE); SCHÜTTLER, Thomas, 51061 Köln (DE); STRUWE, Marianne, 40764 Langenfeld (DE); WINTERMANTEL, Matthias, 50354 Hürth (DE)
(74) Vertreter: Levpat
(86) Internationale Anmeldenummer: PCT/EP2018/084555
(87) Internationale Veröffentlichungsnummer: WO 2019/129489

(56) Entgegenhaltungen:
- WO-A1-2012/002932
- DE-A1- 4 237 468

## Beschreibung

### Gebiet der Erfindung

Die vorliegende Erfindung betrifft silanmodifizierte Polyharnstoffverbindungen auf Basis Isocyanurat- und Allophanatgruppen aufweisender Polyisocyanate und deren Verwendung als Bindemittel in Beschichtungen, insbesondere im Bereich des Korrosionsschutzes.

### Stand der Technik

Die Verwendung alkoxysilanmodifizierter Polyharnstoffverbindungen als Bindemittel in Beschichtungen ist bekannt. Die Verbindungen weisen endständige Alkoxysilangruppen auf, welche die Eigenschaft haben, bei Kontakt mit geringen Mengen Feuchtigkeit zu Organsilanolen zu hydrolysieren und durch nachfolgende Kondensation zu Organosiloxanen zu polymerisieren. Diese Polymerisation führt zu einer auch als Aushärtung bezeichneten Vernetzung der silanmodifizierten Polyharnstoffverbindung. Wegen dieser Fähigkeit zur weiteren Vernetzung werden silanmodifizierte Polyharnstoffverbindungen auch als silanterminierte Präpolymere (STP) bezeichnet und eignen sich als Bindemittel für feuchtigkeitshärtende Beschichtungen.

Die EP 0949 284 A1 beschreibt silanmodifizierte Polyisocyanate mit einem Anteil freier Isocyanatgruppen von 0.2 bis 20 Gew.-%. Diese Polyisocyanate eignen sich als Bindemittel in Kombination mit einer isocyanatreaktiven Komponente zur Herstellung von Zwei-Komponenten-Beschichtungen, -Klebstoffen und -Dichtstoffen. Für die Anwendung in Zwei-Komponenten-Systemen ist die Gegenwart freier Isocyanatgruppen erforderlich. Aufgrund der hohen Reaktivität freier Isocyanatgruppen stellen diese Verbindungen und die diese enthaltenden Zusammensetzungen jedoch eine mögliche toxikologische Gefahr für den Anwender dar. Aus diesem Grund besteht ein Bedarf an isocyanatfreien Bindemitteln.

Die EP 0 924 231 A1 beschreibt wässrige Dispersionen von Polyurethan/PolyharnstoffVerbindungen auf Basis von Polyisocyanaten, die mit Polyolen und Aminosilanen umgesetzt wurden. Um die Dispergierbarkeit in Wasser zu gewährleisten, weisen die Verbindungen vorzugsweise zusätzliche anionische Gruppen auf. Diese Verbindungen können beispielsweise als Bindemittel für Beschichtungen, Klebstoffe und Dichtstoffe eingesetzt werden. Eine Verwendung in Korrosionsschutzsystemen, insbesondere in nicht-wässrigen Decklackbeschichtungen wird nicht offenbart. Die DE 10 2012 204 298 A1 beschreibt Bindemittel auf Basis von Polyisocyanaten, die mit sekundären Aminosilanen zu silanmodifizierten Polyharnstoffverbindungen umgesetzt werden. Als Aminosilane werden dabei sekundäre N-Alkyl-, N-Cycloalkyl- oder N-Aryl-aminoalkoxysilane eingesetzt. Als Polyisocyanate werden aliphatische oder cycloaliphatische, monomere oder oligomere Polyisocyanate eingesetzt. Durch die nahezu quantitative Umsetzung des Polyisocyanats mit dem Aminosilan enthalten diese Bindemittel einen sehr geringen Anteil freier Isocyanatgruppen. Die Kombination dieser Bindemittel mit bestimmten Härtungskatalysatoren erlaubt die Herstellung von Beschichtungen mit hoher mechanischer Beständigkeit.

Die WO 2012/002932 A1 beschreibt Ein-Komponenten-Beschichtungen für den Einsatz im Schiffsbau. Diese Beschichtungen zeichnen sich durch eine hohe UV-Beständigkeit aus. Die Beschichtungen enthalten ein Bindemittel auf Basis von Polyisocyanaten, die mit sekundären Aminosilanen zu silanmodifizierten Polyharnstoffverbindungen umgesetzt werden. Als Aminosilane werden wie auch in der DE 10 2012 204 298 A1 sekundäre N-Alkyl-, N-Cycloalkyl- oder N-Arylaminoalkoxysilane eingesetzt. Ebenso werden als Polyisocyanate aliphatische oder cycloaliphatische, monomere oder oligomere Polyisocyanate eingesetzt.

Die in DE 10 2012 204 298 A1 und WO 2012/002932 A1 offenbarten Bindemittel erfüllen grundsätzlich die Anforderungen an isocyanatfreie Bindemittel und eignen sich für den Einsatz in Beschichtungen, insbesondere als Deckbeschichtung in einem Korrosionsschutzsystem. Allerdings besteht weiterhin Bedarf an Beschichtungen mit verbesserten technischen Eigenschaften.

Insbesondere besteht ein Bedarf an schnell härtenden Bindemitteln mit einer deutlich verkürzten Trocknungszeit (z.B. gemessen als Trocknungsgrad T1 und T6 in Anlehnung an die DIN EN ISO 9117/5). Dieser Bedarf besteht insbesondere, aber nicht ausschließlich, bei Ethoxysilanmodifizierten Bindemitteln, die wegen ihres geringeren toxikologischen Potentials allgemein bevorzugt werden, aber langsamer härten als vergleichbare Methoxysilan-modifzierte Bindemittel.

### Beschreibung der Erfindung

Aus diesem Grund ist es Aufgabe der Erfindung ein schnell härtendes Bindemittel für den Einsatz in Beschichtungen bereitzustellen. Das Bindemittel soll sich insbesondere für den Einsatz in einer Deckbeschichtung eines Korrosionsschutzsystems eignen. Darüber hinaus soll die Erfindung ein isocyanatfreies und insofern toxikologisch unbedenkliches Bindemittel bereitstellen. Vorzugsweise soll das Material während der Härtung auch kein Methanol freisetzen.

### Silanmodifizierte Polyharnstoffverbindung

Diese Aufgabe wird gelöst durch eine silanmodifizierte Polyharnstoffverbindung, herstellbar durch Umsetzung
eines Polyisocyanats auf Basis von Isophorondiisocyanat, welches Isocyanurat- und Allophanatstruktureinheiten aufweist,
mit einem Aminosilan gemäß der allgemeinen Formel (I)

   R¹ₐ(R¹O)₍₃₋ₐ₎Si(CH₂)ₙNHCHR²CH₂COOR³ (I)

   wobei die Reste R¹ unabhängig voneinander ausgewählt sind aus C₁-C₂₀-Alkyl oder C₆-C₂₀-Aryl, a eine ganze Zahl zwischen 0 und 2 ist,
n eine ganze Zahl zwischen 1 und 4 ist,
R² ausgewählt ist aus H, C₁-C₂₀-Alkyl, C₆-C₁₂-Aryl und -COOR³, und
R³ jeweils C₁-C₂₀-Alkyl ist.

Die erfindungsgemäßen Verbindungen zeichnen sich durch eine neue Kombination von Polyisocyanat und Aminosilan aus und eignen sich in besonderer Weise als Bindemittel für Beschichtungen. Die Verwendung der erfindungsgemäßen Verbindungen als Bindemittel führt überraschenderweise zu einer verbesserten Härteentwicklung der Beschichtung. Dies drückt sich unter anderem in einer schnelleren Entwicklung der Pendelhärte (beispielsweise gemessen mit einem Pendeldämpfungsgerät nach König gemäß DIN EN ISO 1522:2007-04) und einer schnelleren Durchtrocknung der Beschichtung aus (beispielsweise gemessen als Trocknungsgrad T1 und T6 in Anlehnung an die DIN EN ISO 9117/5). Zudem weisen die erfindungsgemäßen Verbindungen verglichen mit Bindemitteln, die auf N-Alkyl-Trialkoxyaminosilanen basieren, eine geringere Viskosität bei gleichzeitig höherem Polymergehalt auf. Die erfindungsgemäßen Produkte benötigen daher zum Einstellen einer geforderten niedrigen Viskosität weniger Lösungsmittel als die Verbindungen auf Basis von N-Alkyl-trialkoxyaminosilanen. Damit erfüllt die Erfindung die in allen Bereichen der Lackindustrie stetig wachsende Forderung nach niedrigen Lösungsmittelmengen.

Es hat sich gezeigt, dass dieser Effekt auf die erfindungsgemäße Kombination eines auf IPDIbasierenden oligomeren Polyisocyanats, welches Isocyanurat- und Allophanatgruppen aufweist, und eines Aminosilans gemäß Formel (I) zurückzuführen ist. Das erfindungsgemäße Bindemittel übertrifft in seiner Wirkung insbesondere solche Bindemittel, die auf anderen aliphatischen Polyisocyanaten basieren, so wie Isocyanuratgruppen aufweisenden oligomeren Polyisocyanaten auf Basis von Hexamethylendiisocyanat (HDI).

Die erfindungsgemäßen Verbindungen haben einen geringen Anteil freier Isocyanatgruppen. Damit sind die erfindungsgemäßen Verbindungen toxikologisch unbedenklich und leicht zu handhaben. Vorzugsweise beträgt der Anteil freier Isocyanatgruppen weniger als 0,2 Gew.-%, besonders bevorzugt weniger als 0,01 Gew.-%, am meisten bevorzugt weniger als 0,001 Gew.-%. Idealerweise weisen die Verbindungen innerhalb der Nachweisgenauigkeit keine freien Isocyanatgruppen auf. Der Anteil freier Isocyanatgruppen kann gemäß DIN EN ISO 11909:2007-05 bestimmt werden.

Die erfindungsgemäßen Verbindungen zeichnen sich außerdem durch einen hohen Anteil an Silangruppen bezogen auf das Gewicht der Verbindung aus. Dies verbessert die Härtungseigenschaften von Beschichtungsmitteln, welche die erfindungsgemäßen Verbindungen als Bindemittel umfassen. Somit eignen sich die erfindungsgemäßen Verbindungen insbesondere zur Herstellung schnelltrocknender Beschichtungen.

Der Anteil an Silangruppen bezogen auf das Gewicht der Verbindung wird üblicherweise als Anteil von Silizium bezogen auf das Gewicht der Verbindung angegeben und beträgt vorzugsweise 0,1 bis 10 Gew.-%, bevorzugt 1 bis 7 Gew.-%, am meisten bevorzugt 1,5 bis 5 Gew.-%. Der Siliziumanteil kann beispielsweise aus der Menge des für die Herstellung der erfindungsgemäßen Verbindung eingesetzten Aminosilans berechnet werden. Der Siliziumanteil kann außerdem durch induktiv gekoppelte Plasma-Atom-Emissionsspektrometrie (ICP-OES) bestimmt werden.

Die Verbindungen weisen vorzugsweise ein zahlenmittleres Molekulargewicht von 300 bis 6000 g/mol, bevorzugt 800 bis 4000 g/mol, besonders bevorzugt 1000 bis 3000 g/mol, am meisten bevorzugt 1000 bis 2000 g/mol auf. Das gewichtsmittlere Molekulargewicht beträgt vorzugsweise 500 bis 5000 g/mol, bevorzugt 800 bis 3000 g/mol, besonders bevorzugt 1000 bis 3000 g/mol. Das zahlenmittlere bzw. gewichtsmittlere Molekulargewicht kann mittels Gelpermeationschromatographie (GPC) gemäß DIN 55672-1:2016-03 mit THF als Eluent gegen einen Polystyrolstandard ermittelt werden.

### Zusätzliche Alkohole und Amine

Die Verbindungen weisen vorzugsweise weitere Harnstoff- bzw. Urethangruppen auf, welche durch Umsetzung eines Teils der Isocyanatgruppen des Polyisocyanats mit einem Dialkylamin bzw. einem Alkohol erhältlich sind. Auf diese Weise lässt sich der Anteil an silanmodifizierten Endgruppen einstellen.

Als Alkohol kommen hierbei vorzugsweise aliphatische Alkohole mit 1 bis 20 Kohlenstoffatomen in Betracht. Darunter fallen im Rahmen dieser Erfindung auch alkoxylierte Alkohole, welche Ethergruppen umfassen. Besonders bevorzugt sind aliphatische Alkohole mit 1 bis 16 Kohlenstoffatomen. Besonders bevorzugt handelt es sich bei den Alkoholen um Monoalkohole. Geeignete Alkohole sind beispielsweise Methanol, Ethanol, n- und iso-Propanol, n-Butanol, Ethylenglykolmonobutylether, 2-Ethylhexanol, 1-Octanol, 1-Dodecanol, 1-Hexadecanol.

### Quervernetzende Polyole

Als Alkohol können auch Polyole verwendet werden, wodurch es zu einer Vorvernetzung der Polyisocyanatmoleküle kommen kann. Vorzugsweise handelt es sich bei der erfindungsgemäßen Verbindung jedoch um eine unvernetzte Verbindung und es werden keine Polyole eingesetzt.

Einsetzbare Polyole weisen vorzugsweise ein zahlenmittleres Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt vorzugsweise 22 bis 700 mg KOH/g, bevorzugt 30 bis 300 mg KOH/g und besonders bevorzugt 40 bis 250 mg KOH/g. Die Polyole weisen vorzugsweise eine OH-Funktionalität von 1,5 bis 6, bevorzugt von 1,7 bis 5 und besonders bevorzugt von 1,8 bis 5 auf.

Einsetzbare Polyole sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole Polyacrylatpolyole oder Polycarbonatpolyole, besonders bevorzugt sind Polyetherpolyole, Polyestherpolyole und Polycarbonatpolyole.

Als Polyetherpolyole seien z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 5, OH-Zahlen von 22 bis 700, bevorzugt von 40 bis 600 mg KOH/g Feststoff und Molekulargewichte Mₙ von 106 bis 4000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente sind Polypropylenoxidpolyole, Polyethylenoxidpolyole und Polytetramethylenoxidpolyole.

Gut geeignete Beispiele für Polyesterpolyole sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei die drei letztgenannten Verbindungen bevorzugt sind. Um eine Funktionalität > 2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure, verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Mögliche einsetzbare Polyester sind auch Polycaprolactonpolyole, wie sie von der Firma Perstorp als CAPA Polycaprolactonpolyole kommerziell erhältlich sind.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Anstelle der oben beschriebenen polymeren Polyether-, Polyester- oder Polycarbonatpolyolen kann man auch niedermolekulare Polyole im Molgewichtsbereich von 62 - 400 g/mol für die Herstellung der erfindungsgemäßen Verbindungen verwenden. Geeignete niedermolekulare Polyole sind kurzkettige, d.h. 2 bis 20 Kohlenstoffatome enthaltende, aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 2,2,4-Trimethyl-1,3-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die genannten Polyole können alleine oder in Mischung verwendet werden.

Als Dialkylamin kann vorzugsweise eine Verbindung der Formel NH(R⁴)₂ eingesetzt werden, wobei R⁴ jeweils C₁-C₆-Alkyl ist. Ein besonders bevorzugtes Dialkylamin ist Di-n-butylamin.

### Polyisocyanate

Die Verbindungen basieren auf einem Polyisocyanat auf Basis von Isophorondiisocyanat, welches Isocyanurat- und Allophanatgruppen aufweist. Dabei handelt es sich um ein oligomeres Polyisocyanat, welches ausgehend von Isophorondiisocyanat durch an sich bekannte Verfahren hergestellt wird. Ein Teil der in dem Isophorondiisocyanat vorhandenen Isocyanatgruppen wird in Gegenwart eines geeigneten Katalysators einer Trimerisierungsreaktion unterworfen. Vor, während und/oder im Anschluss an die Trimerisierung wird dem Reaktionsgemisch ein Alkanol zugegeben, so dass ein Teil der Iscoyanatgruppen mit dem Alkanol über die entsprechende Urethanstufe zum Allophanat reagieren. Die Details dieses Herstellungsverfahrens sind dem Fachmann bekannt und beispielsweise in der EP 0 649 866 A1 offenbart.

Als Alkanol wird dabei vorzugsweise ein aliphatischer Alkohol mit 1 bis 6 Kohlenstoffatomen oder Mischungen dieser Alkohole eingesetzt. Geeignete Alkohole sind beispielsweise Methanol, Ethanol, n- und iso-Propanol, n-Butanol, n-Pentanol, 2-Ethyl-1-hexanol, 1-Octanol, 1-Dodecanol, 1-Hexadecanol. Besonders bevorzugt sind n-Butanol, n-Pentanol und 2-Ethyl-1-hexanol. Vorzugsweise wird eine Mischung umfassend n-Butanol eingesetzt. Besonders bevorzugt wird eine Mischung umfassend n-Butanol und n-Pentanol eingesetzt.

Das Polyisocyanat hat vorzugsweise einen Gehalt an Isocyanatgruppen von 8 bis 20 Gew.-%, bevorzugt 10 bis 18 Gew.-%, besonders bevorzugt 10 bis 15 Gew.-%.

Das Polyisocyanat hat vorzugsweise einen Gehalt an Isocyanuratgruppen, berechnet als C₃N₃O₃ (Molekulargewicht 126 g/mol), von 3,5 bis 24 Gew.-%, bevorzugt 7 bis 17 Gew.-%.

Das Polyisocyanat hat vorzugsweise einen Gehalt an Allophanatgruppen, berechnet als C₂HN₂O₃ (Molekulargewicht 101 g/mol), von 2,5 bis 23 Gew.-%, bevorzugt 5 bis 16 Gew.-%.

Das Polyisocyanat hat vorzugsweise einen Gesamtgehalt an Isocyanatgruppen, Isocyanuratgruppen und Allophanatgruppen von 28 bis 51 Gew.-%.

Ein besonders geeignetes Polyisocyanat ist unter dem Handelsnamen Desmodur XP 2565 kommerziell erhältlich.

Das erfindungsgemäß einzusetzende Polyisocyanat auf Basis von Isophorondiisocyanat, welches Isocyanurat- und Allophanatgruppen aufweist, kann auch in Form einer Mischung umfassend weitere Polyisocyanate eingesetzt werden. Vorzugsweise beträgt der Anteil von reinem Polyisocyanat auf Basis von Isophorondiisocyanat, welches Isocyanurat- und Allophanatgruppen aufweist, in dieser Mischung mindestens 50 Gew.-%, bevorzugt mindestens 60 Gew.-%, am meisten bevorzugt mindestens 75 Gew.-%, jeweils bezogen auf die Gesamtmenge an reinem Polyisocyanat.

### Aminosilane

Die Verbindungen umfassen Silangruppen, die aus sekundären Aminosilanen der allgemeinen Formel (I) abgeleitet sind.

Vorzugsweise umfassen die Verbindungen Ethoxy- oder Methoxysilangruppen. Die Reste R¹ stehen deshalb bevorzugt für Ethyl oder Methyl. Besonders bevorzugt stehen die Reste R¹ für Ethyl.

Die Verbindungen umfassen vorzugsweise Dialkoxy- oder Trialkoxysilangruppen. Dementsprechend ist a vorzugsweise 0 oder 1.

Besonders bevorzugt handelt es sich bei den Aminosilanen der Formel (I) um Aminopropylsilane mit n = 3.

Vorzugsweise handelt es sich bei den Aminosilanen der Formel (I) um sekundäre Aminosilane, die durch Umsetzung eines primären Aminosilans mit Estern der Maleinsäure, Fumarsäure oder Zimtsäure erhalten werden können.

Vorzugsweise steht R² deshalb für C₆-C₁₂-Aryl oder -COOR³, besonders bevorzugt für Phenyl oder -COOR³. Am meisten bevorzugt steht R² für -COOR³.

Der Rest R³ ist vorzugsweise ein C₁-C₆-Alkyl, beispielsweise Methyl, Ethyl, n- oder iso-Propyl, n-Butyl, iso-Butyl, sec-Butyl, tert-Butyl, n-Pentyl, 2-Pentyl oder 3-Pentyl. Am meisten bevorzugt steht R³ für Ethyl oder Methyl.

### Herstellungsverfahren

Die Erfindung betrifft außerdem ein Verfahren zur Herstellung der erfindungsgemäßen Polyharnstoffverbindung durch
a) Bereitstellen eines Polyisocyanats auf Basis von Isophorondiisocyanat, welches Isocyanurat- und Allophanatgruppen aufweist,
b) Umsetzen zumindest eines Teils der NCO-Gruppen des Polyisocyanats mit einem Aminosilan gemäß der allgemeinen Formel (I)

   R¹ₐ(R¹O)₍₃₋ₐ)Si(CH₂)ₙNHCHR²CH₂COOR³ (I)

   wobei die Reste R¹ unabhängig voneinander ausgewählt sind aus C₁-C₂₀-Alkyl oder C₆-C₂₀-Aryl, a eine ganze Zahl zwischen 0 und 2 ist,
   n eine ganze Zahl zwischen 1 und 4 ist,
   R² ausgewählt ist aus H, C₁-C₂₀-Alkyl, C₆-C₁₂-Aryl und -COOR³, und
   R³ jeweils C₁-C₂₀-Alkyl ist,
c) optional Umsetzen eines Teils der NCO-Gruppen des Polyisocyanats mit einem Dialkylamin oder einem Alkohol,
   wobei die Schritte b) und c) zeitgleich oder in beliebiger Reihenfolge nacheinander durchgeführt werden können.

Die Umsetzung der Schritte b) und c) erfolgen in flüssiger Phase, gegebenenfalls in Gegenwart eines zusätzlichen Lösungsmittels. Grundsätzlich ist die Umsetzung von Polyisocyanaten mit Aminosilanen dem Fachmann bekannt. Die Umsetzung der NCO-Gruppen des Polyisocyanats mit dem Aminosilan bzw. dem Dialkylamin erfolgt vorzugsweise bei einer Temperatur von weniger als 130°C, bevorzugt im Bereich von 30 bis 80°C. Die Umsetzung der NCO-Gruppen des Polyisocyanats mit dem Alkohol wird vorzugsweise bei Temperaturen von 20 °C bis 200 °C, bevorzugt 40 °C bis 140 °C und besonders bevorzugt von 60 °C bis 120 °C durchgeführt. Vorzugsweise wird als Lösungsmittel 1-Methoxy-2-propylacetat oder Butylacetat zugegeben.

Die Umsetzung der freien NCO-Gruppen mit dem Dialkylamin kann ohne Katalyse erfolgen.

Als Alkohol kann wie oben beschrieben ein Monoalkohol oder ein Polyol eingesetzt werden. Vorzugsweise wird ein Monoalkohol eingesetzt. Die Umsetzung der freien NCO-Gruppen mit Monoalkoholen oder Polyolen zu Urethangruppen kann unkatalysiert erfolgen, wird aber bevorzugt durch Katalyse beschleunigt. Zur Beschleunigung der NCO-OH-Reaktion kommen dem Fachmann an sich bekannte Urethanisierungskatalysatoren wie beispielsweise Organozinnverbindungen, Bismuthverbindungen, Zinkverbindungen, Titanverbindungen, Zirkoniumverbindungen oder aminische Katalysatoren in Frage.

Im Herstellungsverfahren wird diese Katalysatorkomponente, sofern mitverwendet, in Mengen von 0,001 Gew.-% bis 5,0 Gew.-%, bevorzugt 0,005 Gew.-% bis 2 Gew.-% und besonders bevorzugt 0,01 Gew.-% bis 1 Gew.-% bezogen auf den Festgehalt des Verfahrensprodukts eingesetzt.

Die Reaktion wird vorzugsweise fortgeführt, bis ein vollständiger Umsatz der isocyanatreaktiven Gruppen erreicht ist. Der Verlauf der Reaktion wird sinnvollerweise durch die Überprüfung des NCO-Gehaltes überwacht und ist beendet, wenn der entsprechende theoretische NCO-Gehalt erreicht und konstant ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das Verfahren kontinuierlich z.B. in einem Statik-Mischer, Extruder oder Kneter oder diskontinuierlich z.B. in einem Rührreaktor durchgeführt wird. Bevorzugt wird das Verfahren in einem Rührreaktor durchgeführt.

### Beschichtungen

Die Erfindung betrifft außerdem feuchtigkeitshärtende Beschichtung umfassend die erfindungsgemäße Polyharnstoffverbindung und einen Vernetzungskatalysator. Es handelt sich bei der erfindungsgemäßen Beschichtung vorzugsweise um eine Deckbeschichtung für ein Korrosionsschutzsystem.

Der Anteil der erfindungsgemäßen Polyharnstoffverbindung in der Beschichtung beträgt vorzugsweise 10 bis 80 Gew.-%, bevorzugt 20 bis 70 Gew.-%, besonders bevorzugt 30 bis 60 Gew.-%, bezogen auf das Gesamtgewicht der Beschichtung.

### Vernetzungskatalysator

Als Vernetzungskatalysator wird im Rahmen dieser Erfindung eine Verbindung bezeichnet, welche die Kondensationsreaktion der Alkoxysilangruppen der erfindungsgemäßen Polyharnstoffverbindung in Gegenwart von Wasser katalysiert. Als Vernetzungskatalysator können die im Stand der Technik bekannten Katalysatoren verwendet werden. Bei dem Katalysator kann es sich beispielsweise um einen Metallkatalysator oder eine phosphor- und/oder stickstoffhaltige Verbindung handeln.

Geeignete Metallkatalysatoren umfassen vorzugsweise ein Metall ausgewählt aus Zn, Sn, Ti, Zr und Al. Vorzugsweise handelt es sich um Organozinkverbindungen, Organozinnverbindungen, Organotitanate, Organozirconate und Organoaluminate. Die Organotitanate, Organozirconate und Organoaluminate weisen bevorzugt Liganden auf, welche ausgewählt sind aus einer Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können. Geeignete Metallkatalysatoren sind beispielsweise in der US 2016/0244606 A1 beschrieben.

Beispiele für geeignete phosphorhaltige Katalysatoren sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-monoester und -diester, eingesetzt.

Saure Katalysatoren wie Sulfonsäuren sind ebenfalls als Katalysatoren verwendbar, wie in der DE 102012204298 beschrieben. Darüber hinaus können auch Carboxylate verwendet werden, wie sie ebenfalls in der DE 102012204298 beschrieben werden.

Ganz besonders bevorzugt werden als Katalysator die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchen die Phosphorsäureester blockiert werden, sind insbesondere tertiäre Amine, beispielsweise bicyclische Amine, wie z. B. Diazabicyclootan (DABCO), 5-Diaza-bicyclo[4.3.0]non-5-en (DBN), 1,8-Diazabicyclo[5.4.0]undec-7-en (DBU), Dimethyldodecylamin oder Triethylamin, zu nennen.

Geeignete stickstoffhaltige Katalysatoren sind beispielsweise Amidine; Amine wie insbesondere N-Ethyl-diisopropylamin, N,N,N',N'-Tetramethylalkylendiamine, Polyoxyalkylenamine, 1,4-Diazabicyclo[2.2.2]octan; Aminosilane wie 3-Amino-propyl-trimethoxysilan, 3-Aminopropyldimethoxymethylsilan, N-(2-Aminoethyl)-3-aminopropyl-trimethoxysilan, N-(2-Aminoethyl)-3-amino-propyl-methyldimethoxysilan, N-(2-Aminoetliyl)-N'-[3-(trimethoxysilyl)propyl]ethylendiamin sowie deren Analoga mit Ethoxy- oder Isopropoxy- anstelle der Methoxygruppen am Silicium.

Besonders bevorzugte Vernetzungskatalysatoren sind Organotitanate und Amidine.

Bevorzugte Organotitanate sind insbesondere Bis(ethylacetoacetato)-diisobutoxy-titan(IV), Bis(ethylacetoacetato)-diisopropoxy-titan(IV), Bis(acetylacetonato)-diisopropoxy-titan(IV), Bis-(acetylacetonato)-diisobutoxy-titan(IV), Tris(oxyethyl)-amin-isopropoxy-titan(IV), Bis[tris(oxy-ethyl)amin]-diisopropoxytitan(IV), Bis(2-ethylhexan-1,3-dioxy)-titan(IV), Tris[2-((2-aminoethyl)-amino)ethoxy]-ethoxy-titan(IV), Bis(neopentyl(diallyl)oxy-diethoxytitan(IV), Titan(IV)-tetrabutanolat, Tetra-(2-ethylhexyloxy)titanat, Tetra-(isopropoxy)titanat und Polybutyltitanat.

Bevorzugte Amidine sind insbesondere 1,8-Diazabicyclo[5.4.0]undec-7-en (DBU), 1,5-Diazabi-cyclo[4.3.0]non-5-en (DBN), 6-Dibutylamino-1,8-diazabicyclo[5.4.0]-undec-7-en; Methyltriazabicyclodecen, Guanidine wie Tetramethylguanidin, 2-Guanidinobenzimidazol, Acetylacetoneguanidin, 1,3-Di-o-tolylguanidin, 1,3-Diphenylguanidin, Tolylbiguanidin, 2-tert.Butyl-1,1,3,3-tetramethylguanidin; und Imidazole wie N-(3-Trimethoxysilylpropyl)-4,5-dihydroimidazol und N-(3-Triethoxysilylpropyl)-4,5-dihydroimidazol.

Besonders bevorzugt werden als Vernetzungskatalysator 1,8-Diazabicyclo[5.4.0]undec-7-en (DBU) oder 1,5-Diazabicyclo[4.3.0]non-5-en (DBN) eingesetzt.

Der Anteil an Vernetzungskatalysator in der Beschichtung beträgt vorzugsweise 0,001 bis 5 Gew.-%, bevorzugt 0,005 bis 2 Gew.-%, besonders bevorzugt 0,01 bis 1 Gew.-%, bezogen auf das Gesamtgewicht des Beschichtungsmittels.

### Weitere Beschichtungsbestandteile

Die Beschichtung kann zusätzlich in der Lacktechnologie bekannte Lösungsmittel, Füllstoffe, Pigmente und sonstige Lackadditive enthalten.

Geeignete Lösungsmittel sind beispielsweise 2-Ethylhexanol, Aceton, 2-Butanon, Methylisobutylketon, Butylacetat, Ethylacetat, 1-Methoxy-2-propylacetat (MPA), 3-Methoxy-1-butylacetat, Propylen-n-Butylether, Toluol, Methylethylketon, Xylol, 1,4-Dioxan, Diacetonalkohol, N-Methylpyrrolidon, Dimethylacetamid, Dimethylformamid, Dimethylsulfoxid, Methylethylketon, Solvent Naphta (Kohlenwasserstoffgemisch) oder beliebige Gemische solcher Lösungsmittel.

Bevorzugte Lösungsmittel hierbei sind die an sich in der Polyurethanchemie gängigen Lösungsmittel wie Butylacetat, Ethylacetat, 1-Methoxy-2-propylacetat (MPA), 3-Methoxy-1-butylacetat, Propylen-n-Butylether, Toluol, 2-Butanon, Xylol, 1,4-Dioxan, Methylethylketon, N-Methylpyrrolidon, Dimethylacetamid, Dimethylformamid, Methylethylketon, Solvent Naphta (Kohlenwasserstoffgemisch) oder beliebige Gemische solcher Lösungsmittel.

Besonders bevorzugte Lösungsmittel sind Lösungsmittel wie Butylacetat, 1-Methoxy-2-propylacetat (MPA), 3-Methoxy-1-butylacetat, Ethylacetat, Propylen-n-Butylether, Methylethylketon, Toluol, Xylol, Solvent Naphta (Kohlenwasserstoffgemisch) sowie deren Mischungen.

Der Anteil an Lösungsmittel in der Beschichtung beträgt vorzugsweise 0,5 bis 40 Gew.-%, bevorzugt 1 bis 30 Gew.-%, besonders bevorzugt 2 bis 25 Gew.-%,

Geeignete Lackadditive sind insbesondere die in der Lacktechnologie bekannten Mattierungsmittel, Flammschutzmittel, Verlaufshilfsmittel, Netz- und Dispergieradditive, Entschäumer, Entlüftungsmittel, Antioxidantien, Lichtschutzmittel, Wasserfänger, Verdickungsmittel und Thixotropieträger wie sie beispielsweise in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398, beschrieben sind.

Der Anteil an Lackadditiven in der Beschichtung beträgt vorzugsweise 0,5 bis 15 Gew.-%, bevorzugt 1 bis 10 Gew.-%, besonders bevorzugt 2 bis 7 Gew.-%, bezogen auf das Gesamtgewicht der Beschichtung.

Geeignete Füllstoffe sind beispielsweise Schwerspat, Kreide oder Talcum. Weiterhin können Füllstoffe mit Barriere-Wirkung eingesetzt werden, wie z.B. plättchenförmige Schichtsilikate oder Schichtaluminosilikate, Graphit, Aluminiumplättchen oder Barrierepigmente wie beispielsweise Eisenglimmer und Nanofüllstoffe wie z.B. Tone und Aluminiumsilikate. Wobei die Füllstoffe alleine oder in Kombination eingesetzt werden können.

Der Anteil an Füllstoff in der Beschichtung beträgt vorzugsweise 1 bis 30 Gew.-%, bevorzugt 3 bis 20 Gew.-%, besonders bevorzugt 5 bis 15 Gew.-%, bezogen auf das Gesamtgewicht der Beschichtung.

Geeignete Pigmente sind die in der Lacktechnologie bekannten Pigmente wie beispielsweise Titandioxid, Zinkoxid, Eisenoxide, Chromoxide oder Russe.

Der Anteil an Pigmenten in einer Beschichtung beträgt vorzugsweise 5 bis 40 Gew.-%, bevorzugt 10 bis 35 Gew.-%, besonders bevorzugt 15 bis 30 Gew.-%, bezogen auf das Gesamtgewicht der Beschichtung.

Eine ausführliche Übersicht über Pigmente und Füllstoffe für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

### Bevorzugte Ausführungsform

In einer bevorzugten Ausführungsform umfasst die Beschichtung
10 bis 80 Gew.-% der erfindungsgemäßen Polyharnstoffverbindung,
0,5 bis 40 Gew.-% Lösungsmittel,
5 bis 40 Gew.-% Pigmente,
0,5 bis 15 Gew.-% Lackadditive,
1 bis 30 Gew.-% Füllstoff, und
0,001 bis 5 Gew.-% Vernetzungskatalysator,
jeweils bezogen auf das Gesamtgewicht der Beschichtung. Vorzugsweise ergänzen sich die genannten Komponenten zu 100 Gew.-%.

### Verwendung als Bindemittel

Die Erfindung betrifft außerdem die Verwendung der erfindungsgemäßen Verbindung als Bindemittel in einer feuchtigkeitshärtenden Beschichtung. Vorzugsweise dient die Verwendung der erfindungsgemäßen Verbindung der Verbesserung der Härteentwicklung, insbesondere der Beschleunigung der Härteentwicklung der Beschichtung. Vorzugsweise handelt es sich hierbei um eine feuchtigkeitshärte Beschichtung zur Herstellung einer Deckbeschichtung für ein Korrosionsschutzsystem.

### Beispiele

### Herstellung und Untersuchung trialkoxysilanmodifizierter Polyharnstoffverbindungen

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Bei Raumtemperatur wurden dann zunächst Di-n-butylamin innerhalb von 20-45 min zugetropft. Durch die Exothermie der Reaktion steigt die Temperatur der Reaktionsmischung auf 40-50 °C an. Nach Erreichen des theoretisch erwarteten Isocyanatgehaltes wurde das Reaktionsgemisch auf 50 °C erwärmt. Wenn der Ansatz eine sehr hohe Viskosität besaß, wurde vor der weiteren Umsetzung weiteres 1-Methoxy-2-propylacetat zugegeben. Dann wurde N-(3-Triethoxysilylpropyl)asparaginsäurediethylester (hergestellt nach DE 4237468 A1, Beispiel 1) innerhalb von 60 Minuten bei 50 °C tropfenweise zugegeben und nachgerührt, bis laut IR-Spektroskopie oder durch NCO-Titration kein signifikanter NCO-Gehalt mehr nachweisbar war. Durch schrittweise Zugabe von weiterem MPA wurde der Reaktionsansatz auf eine Viskosität von 3000 bis 4000 mPas bei 23 °C eingestellt.

Die Bestimmung der NCO-Gehalte erfolgte gemäß DIN EN ISO 11909.

Sämtliche Viskositätsmessungen erfolgten mit einem Physica MCR 51 Rheometer der Fa. Anton Paar GmbH (DE) nach DIN EN ISO 3219.

Das zahlen- und gewichtsmittlere Molekulargewicht wurde bestimmt durch Gelpermeationschromatographie (GPC) in Tetrahydrofuran bei 23°C gemäß DIN 55672-1.

Gemäß dem oben genannten Herstellungsverfahren wurden die folgenden Beispielverbindungen hergestellt.

### Synthesebeispiel 1 (erfindungs gemäß)

Desmodur XP 2565 ist ein Polyisocyanat auf Basis von Isophorondiisocyanat mit Isocyanurat- und Allophanatgruppen. NCO-Gehalt ca. 12.0 %.

| | |
|---|---|
| Desmodur XP 2565 80 %ig in Butylacetat: | 349,00 g (1 eq. NCO) |
| Di-n-butylamin: | 64,55 g (0,5 eq Amin) |
| N-(3-Triethoxysilylpropyl)asparaginsäurediethylester: | 201,80 g (0,5 eq. Amin) |
| 1-Methoxy-2-propylacetat (MPA): | 153,03 g |
| Viskosität des Endproduktes: | 2810 mPas |
| Polymergehalt des Endproduktes: | 71 % |
| Zahlenmittleres Molgewicht Mₙ gemäß GPC: | 1320 g/mol |
| Gewichtsmittleres Molgewicht M_{w} gemäß GPC: | 1621 g/mol |
| Siliciumgehalt auf Festkörper: | 2,57 % |
| Ethoxysilanfunktionalität auf Festkörper: | 2,75 eq/kg |

### Vergleichsbeispiel 1

Desmodur N 3300 ist ein Polyisocyanat auf Basis von Hexamethylendiisocyanat mit Isocyanuratgruppen. NCO-Gehalt ca. 21.8 %

| | |
|---|---|
| Desmodur N 3300: | 333,33g (1,73 eq. NCO) |
| Di-n-butylamin: | 134,71 g (1,042 eq. Amin) |
| N-(3-Triethoxysilylpropyl)asparaginsäurediethylester: | 272,90 g (0,687 eq. Amin) |
| 1-Methoxy-2-propylacetat (MPA): | 221,32 g |
| | |
| Viskosität des Endproduktes: | 3530 mPas |
| Polymergehalt des Endproduktes: | 77% |
| Zahlenmittleres Molgewicht Mₙ gemäß GPC: | 1573 g/mol |
| Gewichtsmittleres Molgewicht M_{w} gemäß GPC: | 2139 g/mol |
| Siliciumgehalt auf Festkörper: | 2,60 % |
| Ethoxysilanfunktionalität auf Festkörper: | 2,78 eq/kg |

### Vergleichsbeispiel 2

Desmodur XP 2580 ist ein Polyisocyanat auf Basis von Hexamethylendiisocyanat. NCO-Gehalt ca. 19,5 %.

| | |
|---|---|
| Desmodur XP 2580: | 333,33 g (1,547 eq. NCO) |
| Di-n-butylamin: | 115,04 g (0,889 eq. Amin) |
| N-(3-Triethoxysilylpropyl)asparaginsäurediethylester: | 261,42 g (0,658 eq. Amin) |
| 1-Methoxy-2-propylacetat (MPA): | 145,38 g |
| | |
| Viskosität des Endproduktes: | 3950 mPas |
| Polymergehalt des Endproduktes: | 83 % |
| Zahlenmittleres Molgewicht Mₙ gemäß GPC: | 1302 g/mol |
| Gewichtsmittleres Molgewicht M_{w} gemäß GPC: | 1613 g/mol |
| Siliciumgehalt auf Festkörper: | 2,60 % |
| Ethoxysilanfunktionalität auf Festkörper: | 2,78 eq/kg |

### Vergleichsbeispiel 3

Desmodur N 3400 ist ein Polyisocyanat auf Basis von Hexamethylendiisocyanat mit Uretdiongruppen. NCO-Gehalt ca. 21,8 %.

| | |
|---|---|
| Desmodur N 3400: | 342,63 g (1,727 eq. NCO) |
| Di-n-butylamin: | 134,70 g (1,043 eq. Amin) |
| N-(3-Triethoxysilylpropyl)asparaginsäurediethylester: | 274,87 g (0,687 eq. Amin) |
| 1-Methoxy-2-propylacetat (MPA): | 143,28 g |
| | |
| Viskosität des Endproduktes: | 3670 mPas |
| Polymergehalt des Endproduktes: | 84% |
| Zahlenmittleres Molgewicht Mₙ gemäß GPC: | 1154 g/mol |
| Gewichtsmittleres Molgewicht M_{w} gemäß GPC: | 1514 g/mol |
| Siliciumgehalt auf Festkörper: | 2,56 % |
| Ethoxysilanfunktionalität auf Festkörper: | 2,74 eq/kg |

### Vergleichsbeispiel 4

Desmodur N 3200 ist ein Polyisocyanat auf Basis von Hexamethylendiisocyanat mit Biuretgruppen. NCO-Gehalt ca. 23,0 %.

| | |
|---|---|
| Desmodur N 3200: | 333,33 g (1,824 eq. NCO) |
| Di -n-butylamin: | 145,22 g (1,123 eq. NCO) |
| N-(3-Triethoxysilylpropyl)asparaginsäurediethylester: | 281,00 g (0,702 eq. Amin) |
| 1-Methoxy-2-propylacetat (MPA): | 280,93 g |
| | |
| Viskosität des Endproduktes: | 3300 mPas |
| Polymergehalt des Endproduktes: | 73 % |
| Zahlenmittleres Molgewicht Mₙ gemäß GPC: | 1441 g/mol |
| Gewichtsmittleres Molgewicht M_{w} gemäß GPC: | 2176 g/mol |
| Siliciumgehalt auf Festkörper: | 2,59 % |
| Ethoxysilanfunktionalität auf Festkörper: | 2,77 eq/kg |

### Vergleichsbeispiel 5

Desmodur N 3900 ist ein Polyisocyanat auf Basis von Hexamethylendiisocyanat. NCO-Gehalt ca. 23,5 %.

| | |
|---|---|
| Desmodur N 3900: | 333,33 g (1,863 eq. NCO) |
| Di-n-butylamin: | 149,53 g (1,156 eq. Amin) |
| N-(3-Triethoxysilylpropyl)asparaginsäurediethylester: | 283,67 g (0,708 eq. Amin) |
| 1-Methoxy-2-propylacetat (MPA): | 216,2 g |
| | |
| Viskosität des Endproduktes: | 3770 mPas |
| Polymergehalt des Endproduktes: | 78 % |
| Zahlenmittleres Molgewicht Mₙ gemäß GPC: | 1355 g/mol |
| Gewichtsmittleres Molgewicht M_{w} gemäß GPC: | 1666 g/mol |
| Siliciumgehalt auf Festkörper: | 2,59 % |
| Ethoxysilanfunktionalität auf Festkörper: | 2,77 eq/kg |

Die silanmodifizierten Verbindungen des erfinderischen Beispiels 1 und der Vergleichsbeispiele 1 bis 5 wurden mit MPA auf einen Feststoffgehalt von 70 Gew.-% verdünnt. Zu diesen Formulierungen wurde als Härtungskatalysator 1 Gew.-% DBU (bezogen auf die Gesamtmenge inklusive des Lösungsmittels) gegeben. Mit einer Rakel wurde die katalysatorhaltige Formulierung mit 120 µm Nassfilmdicke auf eine trockene Glasplatte aufgetragen. Die Glasplatte wurde in einem Klimaschrank bei 23°C und 50 % relativer Luftfeuchtigkeit gelagert. Nach den in nachfolgender Tabelle 1 genannten Zeiten wird die Beschichtung auf erfolgte Aushärtung geprüft. Dazu wurde die Härte mit einem Pendeldämpfungsgerät nach König gemäß DIN EN ISO 1522:2007-04 untersucht. Eine langsame Pendeldämpfung in Sekunden, d. h. ein hoher Wert in Sekunden, bedeutet eine fortschreitende Aushärtung des Silans.

**Tabelle 1:**

| STP | Si-Dichte (Gew.-% bezogen auf Feststoff) | Pendelhärte (s) nach 5 h | Pendelhärte (s) nach 24 h | Pendelhärte (s) nach 7 d |
|---|---|---|---|---|
| Synthesebeispiel 1 | 2,57 | 34 | 122 | 199 |
| Vergleichsbeispiel 1 | 2,60 | < 10 | 36 | 52 |
| Vergleichsbeispiel 2 | 2,60 | < 10 | 15 | 18 |
| Vergleichsbeispiel 3 | 2,56 | < 10 | < 10 | < 10 |
| Vergleichsbeispiel 4 | 2,59 | < 10 | < 10 | 45 |
| Vergleichsbeispiel 5 | 2,59 | 18 | 18 | 28 |

Die Ergebnisse zeigen deutlich, dass die erfindungsgemäße Verbindung trotz gleicher Silandichte und Silanfunktionalität schneller härtet als die Vergleichsverbindungen auf anderer Polyisocyanatbasis.

### Herstellung und Untersuchung dialkoxysilanmodifizierter Polyharnstoffverbindungen

Die Herstellung dialkoxysilanmodifizierter Polyharnstoffverbindungen erfolgte analog zu der oben beschriebenen Herstellung der trialkoxysilanmodifizierten Verbindungen, außer dass als Aminosilan N-(3-Diethoxymethylsilyl)asparaginsäurediethylester (hergestellt analog DE 4237468 A1, Beispiel 1) eingesetzt wurde und das Aminosilan vor dem Dialkylamin zugegeben wurde.

Es wurden die folgenden Verbindungen hergestellt.

### Synthesebeispiel 2 (erfindungsgemäß)

| | |
|---|---|
| Desmodur XP 2565 80 %ig in Butylacetat: | 1047,00 g (3,00 eq. NCO) |
| N-(3-Diethoxymethylsilylpropyl)asparaginsäurediethylester: | 759,57 g (2,10 eq. Amin) |
| Di-n-butylamin: | 116,32 g (0,90 eq Amin) |
| 1-Methoxy-2-propylacetat (MPA): | 424,36 g |
| | |
| Viskosität des Endproduktes: | 3390 mPas |
| Polymergehalt des Endproduktes: | 73 % |
| Zahlenmittleres Molgewicht Mₙ gemäß GPC: | 1420 g/mol |
| Gewichtsmittleres Molgewicht M_{w} gemäß GPC: | 1684 g/mol |
| Siliciumgehalt auf Festkörper: | 3,43 % |
| Ethoxysilanfunktionalität auf Festkörper: | 2,43 eq/kg |

### Vergleichsbeispiel 6

| | |
|---|---|
| Desmodur XP 2580: | 333,30g (1,547 eq. NCO) |
| N-(3-Diethoxymethylsilylpropyl)asparaginsäurediethylester: | 334,57 g (0,925 eq. Amin) |
| Di-n-butylamin: | 134,71 g (0,622 eq. Amin) |
| 1-Methoxy-2-propylacetat (MPA): | 153,24 g |
| | |
| Viskosität des Endproduktes: | 3670 mPas |
| Polymergehalt des Endproduktes: | 83 % |
| Zahlenmittleres Molgewicht Mₙ gemäß GPC: | 1382 g/mol |
| Gewichtsmittleres Molgewicht M_{w} gemäß GPC: | 1743 g/mol |
| Siliciumgehalt auf Festkörper: | 3,46 % |
| Ethoxysilanfunktionalität auf Festkörper: | 2,47 eq/kg |

### Vergleichsbeispiel 7

| | |
|---|---|
| Desmodur N 3300: | 333,33g (1,730 eq. NCO) |
| N-(3-Diethoxymethylsilylpropyl)asparaginsäurediethylester: | 349,28 g (0,966 eq. Amin) |
| Di-n-butylamin: | 98,75 g (0,764 eq. Amin) |
| 1-Methoxy-2-propylacetat (MPA): | 233,39 g |
| | |
| Viskosität des Endproduktes: | 4930 mPas |
| Polymergehalt des Endproduktes: | 77 % |
| Zahlenmittleres Molgewicht Mₙ gemäß GPC: | 1807 g/mol |
| Gewichtsmittleres Molgewicht M_{w} gemäß GPC: | 2304 g/mol |
| Siliciumgehalt auf Festkörper: | 3,46 % |
| Ethoxysilanfunktionalität auf Festkörper: | 2,47 eq/kg |

Die Ansätze des Synthesebeispiels 2 und der Vergleichsbeispiele 6 und 7 wurden wie oben beschrieben auf 70 Gew.-% Feststoffanteil verdünnt, mit 1 Gew.-% DBU versetzt (bezogen auf die Gesamtmenge inklusive des Lösungsmittels) und auf Glasplatten gerakelt. Die Lagerung und Bestimmung des Härtungsverlaufes erfolgte ebenfalls wie beschrieben. Die Ergebnisse sind in der folgenden Tabelle 2 beschrieben.

**Tabelle 2:**

| STP | Si-Dichte (Gew.-% bezogen auf Feststoff) | Pendelhärte (s) nach 5 h | Pendelhärte (s) nach 24 h | Pendelhärte (s) nach 7 d |
|---|---|---|---|---|
| Synthesebeispiel 2 | 3,43 | 11 | 92 | 152 |
| Vergleichsbeispiel 6 | 3,46 | < 10 | 10 | 10 |
| Vergleichsbeispiel 7 | 3,46 | < 10 | 10 | 47 |

Auch hier zeigt sich, dass die erfindungsgemäße Verbindung trotz gleicher Silandichte und Silanfunktionalität wesentlich schneller härtet als die Vergleichsverbindungen auf anderer Polyisocyanatbasis.

### Vergleich der Viskositäten der Umsetzungsprodukte von Desmodur XP 2565 mit Aspartatsilan und N-(3-triethoxysilylpropyl)butylamin

### Synthesebeispiel 3 (erfindungsgemäß):

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Diese Mischung wurde auf 55 °C erwärmt. Bei dieser Temperatur wurde dann innerhalb von 2 Stunden N-(3-Triethoxy-silylpropyl)asparaginsäurediethylester (hergestellt nach DE 4237468 A1, Beispiel 1) tropfenweise zugegeben und nachgerührt, bis laut IR-Spektroskopie oder durch NCO-Titration kein signifikanter NCO-Gehalt mehr nachweisbar war. Durch schrittweise Zugabe von weiterem MPA wurde der Reaktionsansatz auf eine Viskosität von 3000 bis 4000 mPas bei 23 °C eingestellt.

| | |
|---|---|
| Desmodur XP 2565 80 %ig in Butylacetat: | 875,00 g (2,5 eq. NCO) |
| N-(3-Triethoxysilylpropyl)asparaginsäurediethylester: | 1017,50 g (2,5 eq. Amin) |
| 1-Methoxy-2-propylacetat (MPA): | 254,4 g |
| | |
| Viskosität des Endproduktes: | 3030 mPas |
| Polymergehalt des Endproduktes: | 80% |
| Zahlenmittleres Molgewicht Mₙ gemäß GPC: | 1583 g/mol |
| Gewichtsmittleres Molgewicht M_{w} gemäß GPC: | 1937 g/mol |
| Siliciumgehalt auf Festkörper: | 4,08% |
| Ethoxysilanfunktionalität auf Festkörper: | 4,37 eq/kg |

### Vergleichsbeispiel 8

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Diese Mischung wurde auf 55 °C erwärmt. Bei dieser Temperatur wurde dann innerhalb von 1 Stunde N-(3-triethoxysilylpropyl)butylamin tropfenweise zugegeben und nachgerührt, bis laut IR-Spektroskopie oder durch NCO-Titration kein signifikanter NCO-Gehalt mehr nachweisbar war. Der Reaktionsansatz war nach Beendigung der Reaktion sehr viskos und wurde durch schrittweise Zugabe von weiterem MPA auf eine Viskosität von etwa 5000 mPas bei 23 °C eingestellt.

| | |
|---|---|
| Desmodur XP 2565 80 %ig in Butylacetat: | 261,8 g (0,75 eq. NCO) |
| N-(3-Triethoxysilylpropyl)asparaginsäurediethylester: | 164,6 g (0,75 eq. Amin) |
| 1-Methoxy-2-propylacetat (MPA): | 79,0 g |
| | |
| Viskosität des Endproduktes: | 5240 mPas |
| Polymergehalt des Endproduktes: | 74 % |
| Zahlenmittleres Molgewicht Mₙ gemäß GPC: | 1252 g/mol |
| Gewichtsmittleres Molgewicht M_{w} gemäß GPC: | 1403 g/mol |
| Siliciumgehalt auf Festkörper: | 5,62% |
| Ethoxysilanfunktionalität auf Festkörper: | 6,02 eq/kg |

Bei Synthesebeispiel 3 und Vergleichsbeispiel 8 wurden in gleichartiger Weise die freien NCO-Gruppen des Desmodur XP 2565 mit einem Aminosilan vollständig umgesetzt. Das erfindungsgemäße Synthesebeispiel 3 zeichnet sich im Vergleich zum Vergleichsbeispiel 8 durch eine vorteilhaftere Viskosität aus. Synthesebeispiel 3 enthält 80 % Polymer und besitzt eine Viskosität von 3030 mPas, während das Vergleichsbeispiel 8 bei einem niedrigerem Polymergehalt und somit höherem Lösungsmittelgehalt eine deutlich höhere Viskosität von 5240 mPas besitzt. Das Vergleichsbeispiel benötigt zur Verarbeitung deutlich mehr Lösungsmittel als das erfindungsgemäße Produkt.

Die Härtungsgeschwindigkeit wird wie oben beschrieben mit 1 % DBU nach Rakeln auf Glas geprüft.

| | Pendelhärte (s) nach 5 h | Pendelhärte (s) nach 24 h |
|---|---|---|
| Synthesebeispiel 3 | 57 | 172 |
| Vergleichsbeispiel 8 | 82 | 145 |

Die Härtungsgeschwindigkeit beider Produkte ist vergleichbar.

### Produkte mit Di-n-butylamin und 2-Ethyl-1-hexanol zum Vergleich

### Synthesebeispiel 4 (erfindungsgemäß)

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Bei Raumtemperatur wurden dann zunächst Di-n-butylamin innerhalb von 20-45 min zugetropft. Durch die Exothermie der Reaktion steigt die Temperatur der Reaktionsmischung auf 40-50 °C an. Nach Erreichen des theoretisch erwarteten Isocyanatgehaltes wurde das Reaktionsgemisch auf 50 °C erwärmt. Wenn der Ansatz eine sehr hohe Viskosität besaß, wurde vor der weiteren Umsetzung weiteres 1-Methoxy-2-propylacetat zugegeben. Dann wurde N-(3-Triethoxysilylpropyl)asparaginsäurediethylester (hergestellt nach DE 4237468 A1, Beispiel 1) innerhalb von 60 Minuten bei 50 °C tropfenweise zugegeben und nachgerührt, bis laut IR-Spektroskopie oder durch NCO-Titration kein signifikanter NCO-Gehalt mehr nachweisbar war. Durch schrittweise Zugabe von weiterem MPA wurde der Reaktionsansatz auf eine Viskosität von 3000 bis 4000 mPas bei 23 °C eingestellt.

| | |
|---|---|
| Desmodur XP 2565 80 %ig in Butylacetat: | 187,50 g (0,54 eq. NCO) |
| Desmodur N 3300: | 50,00 g (0,26 eq. NCO) |
| N-(3-Triethoxysilylpropyl)asparaginsäurediethylester: | 223,94 g (0,56 eq. Amin) |
| Di-n-butylamin: | 31,02 g (0,24 eq Amin) |
| 1-Methoxy-2-propylacetat (MPA): | 106,17 g |
| | |
| Viskosität des Endproduktes: | 3170 mPas |
| Polymergehalt des Endproduktes: | 76 % |
| Zahlenmittleres Molgewicht Mₙ gemäß GPC: | 1562 g/mol |
| Gewichtsmittleres Molgewicht M_{w} gemäß GPC: | 2013 g/mol |
| Siliciumgehalt auf Festkörper: | 3,45 % |
| Ethoxysilanfunktionalität auf Festkörper: | 3,69 eq/kg |

### Synthesebeispiel 5 (erfindungsgemäß)

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Bei einer Temperatur von 53 °C werden der Katalysator K-Kat 348 (King Industries, Norwalk, CT, USA) und 2-Ethyl-1-hexanol zugegeben und 2 Stunden bei dieser Temperatur gerührt, bis der theoretische NCO-Gehalt erreicht war. Nach Erreichen des theoretisch erwarteten Isocyanatgehaltes wurde bei gleicher Temperatur N-(3-Triethoxysilylpropyl)asparaginsäurediethylester (hergestellt nach DE 4237468 A1, Beispiel 1) innerhalb von 90 Minuten tropfenweise zugegeben und nachgerührt, bis laut IR-Spektroskopie oder durch NCO-Titration kein signifikanter NCO-Gehalt mehr nachweisbar war. Durch schrittweise Zugabe von weiterem MPA wurde der Reaktionsansatz auf eine Viskosität von 3000 bis 4000 mPas bei 23 °C eingestellt.

| | |
|---|---|
| Desmodur XP 2565 80 %ig in Butylacetat: | 375,0 g (1,074 eq. NCO) |
| Desmodur N 3300 | 100,00 g (0,516 eq. NCO) |
| 2-Ethyl-1-hexanol | 62,26 g (0,478 eq. OH) |
| N-(3-Triethoxysilylpropyl)asparaginsäurediethylester: | 223,94 g (1,112 eq. Amin) |
| 1-Methoxy-2-propylacetat (MPA): | 151,4 g |
| | |
| Viskosität des Endproduktes: | 3190 mPas |
| Polymergehalt des Endproduktes: | 80 % |
| Zahlenmittleres Molgewicht Mₙ gemäß GPC: | 1698 g/mol |
| Gewichtsmittleres Molgewicht M_{w} gemäß GPC: | 2058 g/mol |
| Siliciumgehalt auf Festkörper: | 3,46% |
| Ethoxysilanfunktionalität auf Festkörper: | 3,68eq/kg |

Die Härtungsgeschwindigkeit wird wie oben beschrieben mit 1 % DBU nach Rakeln auf Glas geprüft.

| | Pendelhärte (s) nach 5 h | Pendelhärte (s) nach 24 h |
|---|---|---|
| Synthesebeispiel 4 | 41 | 136 |
| Synthesebeispiel 5 | 17 | 122 |

Die Härtungskinetik der beiden Produkte (Di-n-butylamin- oder 2-Ethyl-1-hexanol-terminiert) ist vergleichbar.

### Verwendung im Dreischichtaufbau für Korrosionsschutzanwendungen

Analog zu dem oben beschriebenen Verfahren wurde die folgende silanmodifizierte Polyharnstoffverbindung hergestellt und als Bindemittel im Dreischichtaufbau für Korrosionsschutzanwendungen getestet.

### Synthesebeispiel 6 (erfindungsgemäß)

| | |
|---|---|
| Desmodur XP 2565 80 %ig in Butylacetat: | 436,25 g (1,25 eq. NCO) |
| N-(3-Diethoxymethylsilylpropyl)asparaginsäurediethylester: | 476,10 g (1,25 eq. Amin) |
| 1-Methoxy-2-propylacetat (MPA): | 187,78 g |
| | |
| Viskosität des Endproduktes: | 3170 mPas |
| Polymergehalt des Endproduktes: | 75 % |
| Zahlenmittleres Molgewicht Mₙ gemäß GPC: | 1714 g/mol |
| Gewichtsmittleres Molgewicht M_{w} gemäß GPC: | 2055 g/mol |

Die Verbindung nach Synthesebeispiel 6 wurde als Bindemittel zur Herstellung einer pigmentierten Deckbeschichtung eingesetzt, deren Zusammensetzung sich aus der folgenden Tabelle 3 ergibt.

Die Herstellung der Deckbeschichtung erfolgte bei Raumtemperatur, indem Komponente 1 in ein gekühltes Gefäß (doppelwandiges Gefäß mit externer Kühlung durch kaltes Leitungswasser) gegeben wurde. Die Komponente 2 wurde hinzugegeben und die resultierende Mischung bis zur Homogenität bei ca. 600-800 U/min mit einem Dissolver dispergiert. Danach wurde die Komponente 3 unter langsamen Rühren (ca. 600-800 U/min.) zugegeben und danach bei 2800 U/min. für 30 Minuten dispergiert.

Die Deckbeschichtungen wurden nach einem Tag Reifezeit verarbeitet.

**Tabelle 3:**

| Komponente | Einsatzstoff | Einwaage (g) | Gew.-% |
|---|---|---|---|
| 1 | Synthesebeispiel 6 | 773,9 g | 54,88 |
| | Disperbyk 161 (Netz- und Dispergieradditiv) | 21,6 | 1,53 |
| | Dynasylan VTMO (Wasserfänger) | 7,5 | 0,53 |
| | Byk 141 (Entschäumer) | 5,6 | 0,40 |
| | Tinuvin 292 (Lichtschutzmittel) | 5,6 | 0,40 |
| | | | |
| 2 | Aerosil R 972 (Thixotropieträger) | 10,1 | 0,72 |
| | Bentone SD 2 (Thixotropieträger) | 13,6 | 0,96 |
| | MPA (Lösungsmittel) | 67,5 | 4,79 |
| | | | |
| 3 | Tronox R-KB-4 (Pigment) | 365,2 | 25,90 |
| | Schwerspat EWO (Füllstoff) | 139,5 | 9,89 |

Die oben beschriebene Deckbeschichtung wurde vor der Verarbeitung mit 1 Gew.-% DBU auf die eingesetzte Menge an Synthesebeispiel 6 als Vernetzungskatalysator versehen, 1 min. per Hand gut vermischt und dann in einem Mehrschichtaufbaut auf Stahl als Deckbeschichtung verwendet. Der Mehrschichtaufbau wurde durch Spritzapplikation hergestellt und einem Kondenswasser- sowie einem Salzsprühnebeltest unterzogen.

### Spritzapplikation

Die Spritzapplikation erfolgte mit einer Spritzpistole vom Typ SATAjet RP 3000 mit einer SATA Spritzdüse 1,6 mm bei einem Druck von ca. 2,1 bis 2,2 bar. Es wurde bei dem existierenden Raumklima (leichte Schwankungen in Temperatur und Luftfeuchtigkeit möglich) lackiert. Die Beschichtungssysteme wurden je nach Festkörpergehalt des Bindemittels zwischen 5 bis 10 % mit dem Lösemittel, welches schon im Lacksystem vorhanden ist, verdünnt. Üblicherweise ist dieses Lösungsmittel MPA.

### Dreischichtaufbau auf Stahl

Auf einem Stahlblech (gestrahlt SA 2½) wurde als erstes eine 1k-PUR-Grundbeschichtung mittels der beschriebenen Spritzapplikation aufgetragen und anschließend bei Raumtemperatur getrocknet. Die verwendete Grundbeschichtung ist eine 1K PUR Zinkstaub- Grundbeschichtung nach Richtrezeptur der Fa. Covestro Deutschland AG mit der Bezeichnung RR 5280. Nach Trocknung dieser Grundbeschichtung wurde als nächste Schicht eine polyurethanhaltige Zwischenbeschichtung der Richtrezeptur der Fa. Covestro Deutschland AG mit der Bezeichnung RR 5282 appliziert und getrocknet. Die Deckbeschichtung wurde ebenfalls mit der beschriebenen Spritzapplikation aufgetragen und getrocknet.

### Kondenswassertest nach DIN EN ISO 6270-2 CH

In einem geschlossenen Prüfgerät wurde demineralisiertes Wasser auf +40°C erwärmt und verdunstet. Dadurch entstand im Prüfgerät eine kondensierende Feuchte von 100 %. Wärme wurde nach außen abgegeben, wodurch der Taupunkt unterschritten wurde. Der Wasserdampf kondensierte auf den Proben. Die Prüfdauer betrug 1008 h. Nach definierten Zeiten wurde eine Zwischenabmusterung durchgeführt. Zusätzlich erfolgte nach vereinbarter Prüfdauer noch eine Endabmusterung. Dabei wurden die Proben visuell auf Oberflächenveränderungen wie Risse, Krater und Blasenbildung untersucht.

Für den oben beschriebenen Dreischichtaufbau auf Stahl wurde nach 42 Tagen keine Oberflächenveränderung festgestellt.

### Salzsprühnebeltest nach DIN EN ISO 9227 NSS

In einem geschlossenen Prüfgerät wurde bei 35 °C eine 5 %ige Natriumchloridlösung eingesprüht. Durch das versprühte Aerosol entstand im Prüfgerät eine korrosionsfördemde Salznebel-Atmosphäre mit kondensierender Feuchte von 100 %.

Die Prüfung erfolgte mit einem DIN-Schnitt. Die Prüfdauer betrug 1440 h. Nach definierten Zeiten wurde eine Zwischenabmusterung durchgeführt und am Ende der Prüfdauer die Unterwanderung am DIN-Schnitt geprüft. Nach der vereinbarten Prüfdauer erfolgte noch eine Endabmusterung. Dabei wurden die Proben visuell auf Oberflächenveränderungen wie Risse, Krater und Blasenbildung untersucht.

Für den oben beschriebenen Dreischichtaufbau auf Stahl wurde nach 60 Tagen keine Oberflächenveränderung festgestellt.

## Patentansprüche

1. Eine Polyharnstoffverbindung, herstellbar durch Umsetzung
eines Polyisocyanats auf Basis von Isophorondiisocyanat, welches Isocyanurat- und Allophanatgruppen aufweist,
mit einem Aminosilan gemäß der allgemeinen Formel (I)
R¹ₐ(R¹O)₍₃₋ₐ₎Si(CH₂)ₙNHCHR²CH₂COOR³ (I)
wobei die Reste R¹ unabhängig voneinander ausgewählt sind aus C₁-C₂₀-Alkyl oder C₆-C₂₀-Aryl,
a eine ganze Zahl zwischen 0 und 2 ist,
n eine ganze Zahl zwischen 1 und 4 ist,
R² ausgewählt ist aus H, C₁-C₂₀-Alkyl, C₆-C₁₂-Aryl und -COOR³, und
R³ jeweils C₁-C₂₀-Alkyl ist.

2. Die Verbindung nach Anspruch 1, wobei die Verbindung einen Anteil an freien NCO-Gruppen von weniger als 0,2 Gew.-% aufweist.

3. Die Verbindung nach einem der Ansprüche 1 und 2, wobei die Verbindung einen Siliziumgehalt von 0,1 bis 5 Gew.-% aufweist.

4. Die Verbindung nach einem der Ansprüche 1 bis 3, wobei die Verbindung ein zahlenmittleres Molekulargewicht von 300 bis 5000 g/mol aufweist.

5. Die Verbindung nach einem der Ansprüche 1 bis 4, wobei R² -COOR³ ist.

6. Die Verbindung nach einem der Ansprüche 1 bis 5, wobei R¹ ausgewählt ist aus Methyl und Ethyl.

7. Die Verbindung nach einem der Ansprüche 1 bis 6, wobei a = 0 oder 1 ist.

8. Die Verbindung nach einem der Ansprüche 1 bis 7, wobei die Verbindung zusätzlich Harnstoff- und/oder Urethangruppen aufweist, welche erhältlich sind durch Umsetzung des Polyisocyanats mit einem Dialkylamin bzw. einem Alkohol.

9. Die Verbindung gemäß Anspruch 8, wobei das Dialkylamin eine Verbindung der Formel NH(R⁴)₂ ist und R⁴ jeweils C₁-C₆-Alkyl ist.

10. Ein Verfahren zur Herstellung einer Polyharnstoffverbindung durch
a) Bereitstellen eines Polyisocyanats auf Basis von Isophorondiisocyanat, welches Isocyanurat- und Allophanatgruppen aufweist,
b) Umsetzen zumindest eines Teils der NCO-Gruppen des Polyisocyanats mit einem Aminosilan gemäß der allgemeinen Formel (I)
R¹ₐ(R¹O)₍₃₋ₐ₎Si(CH₂)ₙNHCHR²CH₂COOR³ (I)
wobei die Reste R¹ unabhängig voneinander ausgewählt sind aus C₁-C₂₀-Alkyl oder C₆-C₂₀-Aryl,
a eine ganze Zahl zwischen 0 und 2 ist,
n eine ganze Zahl zwischen 1 und 4 ist,
R² ausgewählt ist aus H, C₁-C₂₀-Alkyl, C₆-C₁₂-Aryl und -COOR³, und
R³ jeweils C₁-C₂₀-Alkyl ist,
c) optional Umsetzen eines Teils der NCO-Gruppen des Polyisocyanats mit einem Dialkylamin oder einem Alkohol,
wobei die Schritte b) und c) zeitgleich oder in beliebiger Reihenfolge nacheinander durchgeführt werden können.

11. Eine feuchtigkeitshärtende Beschichtung umfassend die Verbindung nach einem der Ansprüche 1 bis 9 und einen Vernetzungskatalysator.

12. Die Beschichtung nach Anspruch 11, umfassend
10 bis 80 Gew.-% der Verbindung nach einem der Ansprüche 1 bis 9,
0,5 bis 40 Gew.-% Lösungsmittel,
5 bis 40 Gew.-% Farbpigmente,
0,5 bis 15 Gew.-% Lackadditive,
1 bis 30 Gew.-% Füllstoff, und
0,001 bis 5 Gew.-% Vernetzungskatalysator,
jeweils bezogen auf das Gesamtgewicht der Beschichtung.

13. Verwendung der Verbindung nach einem der Ansprüche 1 bis 9 als Bindemittel für eine feuchtigkeitshärtende Beschichtung.

14. Die Verwendung nach Anspruch 13, wobei das Bindemittel zur Verbesserung der Härteentwicklung der Beschichtung eingesetzt wird.

15. Die Verwendung nach einem der Ansprüche 13 und 14, wobei das Bindemittel zur Herstellung einer Deckbeschichtung in einem Korrosionsschutzsystem dient.

## Claims

1. Polyurea compound preparable via reaction of a polyisocyanate based on isophorone diisocyanate and having isocyanurate and allophanate groups with an aminosilane of general formula (I)
R¹ₐ(R¹O)₍₃₋ₐ₎ Si (CH₂)ₙNHCHR²CH₂COOR³ (I)
where the radicals R¹ independently of one another are selected from C₁-C₂₀-alkyl or C₆-C₂₀-aryl,
a is an integer between 0 and 2,
n is an integer between 1 and 4,
R² is selected from H, C₁-C₂₀-alkyl, C₆-C₁₂-aryl and -COOR³, and
R³ in each case is C₁-C₂₀-alkyl.

2. Compound according to Claim 1, wherein the compound has a content of free NCO groups of less than 0.2% by weight.

3. Compound according to either of Claims 1 and 2, wherein the compound has a silicon content of 0.1% to 5% by weight.

4. Compound according to any of Claims 1 to 3, wherein the compound has a number-average molecular weight of 300 to 5000 g/mol.

5. Compound according to any of Claims 1 to 4, wherein R² is -COOR³.

6. Compound according to any of Claims 1 to 5, wherein R¹ is selected from methyl and ethyl.

7. Compound according to any of Claims 1 to 6, wherein a = 0 or 1.

8. Compound according to any of Claims 1 to 7, wherein the compound additionally has urea and/or urethane groups which are obtainable by reaction of the polyisocyanate with a dialkylamine or an alcohol.

9. Compound according to Claim 8, wherein the dialkylamine is a compound of the formula NH(R⁴)₂ and R⁴ in each case is C₁-C₆-alkyl.

10. Process for preparing a polyurea compound by
a) providing a polyisocyanate based on isophorone diisocyanate and having isocyanurate and allophanate groups,
b) reacting at least a portion of the NCO groups of the polyisocyanate with an aminosilane of general formula (I)
R¹ₐ(R¹O)₍₃₋ₐ₎ Si (CH₂)ₙNHCHR²CH₂COOR³ (I)
where the radicals R¹ independently of one another are selected from C₁-C₂₀-alkyl or C₆-C₂₀-aryl,
a is an integer between 0 and 2,
n is an integer between 1 and 4,
R² is selected from H, C₁-C₂₀-alkyl, C₆-C₁₂-aryl and -COOR³, and
R³ in each case is C₁-C₂₀-alkyl,
c) optionally reacting a portion of the NCO groups of the polyisocyanate with a dialkylamine or an alcohol,
wherein steps b) and c) can be performed simultaneously or in succession in any desired sequence.

11. Moisture-curing coating comprising the compound according to any of Claims 1 to 9 and a crosslinking catalyst.

12. Coating according to Claim 11, comprising 10% to 80% by weight of the compound according to any of Claims 1 to 9,
0.5% to 40% by weight of solvent,
5% to 40% by weight of color pigments,
0.5% to 15% by weight of coatings additives,
1% to 30% by weight of filler, and
0.001% to 5% by weight of crosslinking catalyst,
in each case based on the total weight of the coating.

13. Use of the compound according to any of Claims 1 to 9 as a binder for a moisture-curing coating.

14. Use according to Claim 13, wherein the binder is used to improve the development of hardness of the coating.

15. Use according to either of Claims 13 and 14, wherein the binder serves to produce a topcoat in an anticorrosion system.

## Revendications

1. Composé polyurée, pouvant être préparé par mise en réaction
d'un polyisocyanate à base de diisocyanate d'isophorone, qui comporte des groupes isocyanurate et allophanate,
avec un aminosilane selon la formule générale (I)
R¹ₐ(R¹O)₍₃₋ₐ₎ Si (CH₂)ₙNHCHR²CH₂COOR³ (I)
dans laquelle les radicaux R¹ sont choisis, indépendamment les uns des autres, parmi les groupes alkyle en C₁-C₂₀ ou aryle en C₆-C₂₀,
a est un nombre entier compris entre 0 et 2,
n est un nombre entier compris entre 1 et 4,
R² est choisi parmi H, alkyle en C₁-C₂₀, aryle en C₆-C₁₂ et -COOR³, et
R³ est chaque fois un groupe alkyle en C₁-C₂₀.

2. Composé selon la revendication 1, dans lequel le composé présente une teneur en groupes NCO libres de moins de 0,2 % en poids.

3. Composé selon l'une quelconque des revendications 1 et 2, dans lequel le composé présente une teneur en silicium de 0,1 à 5 % en poids.

4. Composé selon l'une quelconque des revendications 1 à 3, dans lequel le composé présente une masse moléculaire moyenne en nombre de 300 à 5 000 g/mole.

5. Composé selon l'une quelconque des revendications 1 à 4, dans lequel R² est -COOR³.

6. Composé selon l'une quelconque des revendications 1 à 5, dans lequel R¹ est choisi parmi méthyle et éthyle.

7. Composé selon l'une quelconque des revendications 1 à 6, dans lequel a = 0 ou 1.

8. Composé selon l'une quelconque des revendications 1 à 7, dans lequel le composé comporte en outre des groupes urée et/ou uréthane, qui peuvent être obtenus par mise en réaction du polyisocyanate avec une dialkylamine ou un alcool.

9. Composé selon la revendication 8, dans lequel la dialkylamine est un composé de formule NH(R⁴)₂ et R⁴ est chaque fois un groupe alkyle en C₁-C₆.

10. Procédé pour la préparation d'un composé polyurée par
a) fourniture d'un polyisocyanate à base de diisocyanate d'isophorone, qui comporte des groupes isocyanurate et allophanate,
b) mise en réaction d'au moins une partie des groupes NCO du polyisocyanate avec un aminosilane selon la formule générale (I)
R¹ₐ(R¹O)₍₃₋ₐ₎ Si (CH₂)ₙNHCHR²CH₂COOR³ (I) dans laquelle les radicaux R¹ sont choisis, indépendamment les uns des autres, parmi les groupes alkyle en C₁-C₂₀ ou aryle en C₆-C₂₀,
a est un nombre entier compris entre 0 et 2,
n est un nombre entier compris entre 1 et 4,
R² est choisi parmi H, alkyle en C₁-C₂₀, aryle en C₆-C₁₂ et -COOR³, et
R³ est chaque fois un groupe alkyle en C₁-C₂₀.
c) en option mise en réaction d'une partie des groupes NCO du polyisocyanate avec une dialkylamine ou un alcool,
les étapes b) et c) pouvant être effectuées simultanément ou l'une après l'autre en un ordre quelconque.

11. Revêtement durcissant à l'humidité, comprenant le composé selon l'une quelconque des revendications 1 à 9 et un catalyseur de réticulation.

12. Revêtement selon la revendication 11, comprenant 10 à 80 % en poids du composé selon l'une quelconque des revendications 1 à 9,
0,5 à 40 % en poids de solvant,
5 à 40 % en poids de pigments colorés,
0,5 à 15 % en poids d'additifs pour peintures,
1 à 30 % en poids de charge, et
0,001 à 5 % en poids de catalyseur de réticulation, chaque fois par rapport au poids total du revêtement.

13. Utilisation du composé selon l'une quelconque des revendications 1 à 9 en tant que liant pour un revêtement durcissant à l'humidité.

14. Utilisation selon la revendication 13, dans laquelle le liant est utilisé pour l'amélioration de la progression de la dureté du revêtement.

15. Utilisation selon l'une quelconque des revendications 13 et 14, dans laquelle le liant sert à la production d'un revêtement de finition dans un système anticorrosion.
